Europäisches Patentamt

European Patent Office

Office européen des brevets

(19)

(11) Publication number : **0 507 733 A1**

# (12) EUROPEAN PATENT APPLICATION

(21) Application number : 92810215.1

(22) Date of filing : 24.03.92

(51) Int. Cl.$^5$ : **B31D 3/02,** B65H 29/34, B65H 20/18

(30) Priority : 03.04.91 US 679889

(43) Date of publication of application :
07.10.92 Bulletin 92/41

(84) Designated Contracting States :
**BE DE GB**

(71) Applicant : **CIBA-GEIGY AG**
**Klybeckstrasse 141**
**CH-4002 Basel (CH)**

(72) Inventor : **Fuillerat, Vincente J.**
**70 West 61 Street**
**Hialeah, FL 33012 (US)**
Inventor : **Malagon, Eduardo**
**10243 S.W. 7 Street**
**Miami, FL 33174 (US)**
Inventor : **Casas, Maria-Teresa**
**3240 S.W. 4 Street**
**Miami, FL 33135 (US)**

(54) **Apparatus for cutting and stacking sheets.**

(57)   An apparatus for the precise cutting and stacking of sheet material to produce layered, unexpanded blocks for producing honeycomb core, said apparatus containing means for unrolling (13) said sheet material with transverse adhesive lines printed thereon, carrier means (14) for conveying the sheet material and photocell (16) identifying means for precisely determining the length of the cut sheets and for indexing the sheets to achieve proper offset of successive sheets necessary for regular cell size geometries ; and a method for accomplishing the same utilizing said apparatus.

FIG. 1

EP 0 507 733 A1

Jouve, 18, rue Saint-Denis, 75001 PARIS

This application relates to an apparatus for the precise cutting and stacking of sheets of material to form stacks of very thin sheet material glued together in a certainfashion so that when expanded they constitute a core of honeycomb-like structure which by application of sheet material to opposite ends of the open cells forming the core constitutes a composite sheet of light-weight reinforced material.

Honeycomb structure material has been developed to supply the need for a particularly light-weight and at the same time especially rigid sheet material adapted for use where great strength may be requisite without the attendant weight. Various methods and techniques have been employed heretobefore in producing honeycomb structure sheets. Initial attempts constituted no more than ways of constructing partitions or composite sheets of some fixed preselected thickness, length and width. In an attempt to reduce the variety and type of machinery needed where such material had to be adapted to different specifications, as well as to reduce the volume during transport, the approach was adopted which involved forming a stack of sheets of material glued together which, when expanded, formed the honeycomb core.

Additionally, numerous methods for forming such stacks have been developed. The need for precise cutting to size, automatic sheeting, proper indexing, reduction in manual operations and substantial elimination of waste of the honeycomb core material forms the basis for these methods. Although much progress has been made, there still is much opportunity for meaningful improvement. By way of example, one such approach which exhibits these disadvantages involves sheeting to size of adhesive printed material using a rotary knife, piling the sheets randomly and manually laying up the stacks of sheets by one-half adhesive line pitch offset positioning of alternate sheets. It is to be noted that such a method is time consuming, relies heavily upon the skill of the worker and requires wasteful trimming of sides and ends.

It is therefore among the objects of the invention to provide a new and improved machine for producing structural honeycomb material, especially structural honeycomb core material, which is versatile to the point of making possible the production of any desired core cell size, thickness and length.

It is a further object to provide such a machine which allows for the precise cutting of sheets of material, indexing of the sheets to the proper offset necessary for the desired cell size geometry and the subsequent alternate stacking of the indexed sheets of material to form the appropriate layered unexpanded block.

It is still another objective to utilize various electronic means to facilitate the preciseness of the aforementioned operations.

These objectives and the benefits obtained in accordance with the present invention are readily achieved by providing a sheeting and stacking apparatus whereby adhesive printed sheet material is transported by carrier means to a vacuum manifold area, the sheet is cut to the desired length and the cut sheet is then positioned properly on a stacking bed to form the registered, unexpanded block. Registration and proper indexing of the alternate sheets is accomplished by photocell means which focuses on an adhesive node line, then sends a signal to a carrier with programmable motion controller such that the carrier is positioned at the desired distance for the desired cell size and required sheet length. The offset positioning of the subsequent sheet allows for the proper sequential registration.

There are numerous advantages to this apparatus and method. In particular, manual operations and the corresponding human errors are eliminated. The length of the respective sheets is virtually identical thereby eliminating the need for trimming the layered unexpanded blocks. Correspondingly, material waste is at a minimum. The apparatus shows great flexibility in being able to produce laminates or blocks of sheets with different lengths and to allow for any pattern of indexing.

Additional features and advantages of the invention will become apparent from the following specification taken with the accompanying drawings wherein:

Fig. 1 is a view in perspective showing the key elements of the sheeting and stacking apparatus of the invention;

Fig. 2 is a top plan view of substantially the same apparatus of Fig. 1; and

Fig. 3 is a side plan view of the apparatus of Fig. 2.

Referring to the drawings, there is illustrated somewhat schematically a machine embodying the principles of the invention and by means of which the steps constituting the method of the invention may be readily conducted.

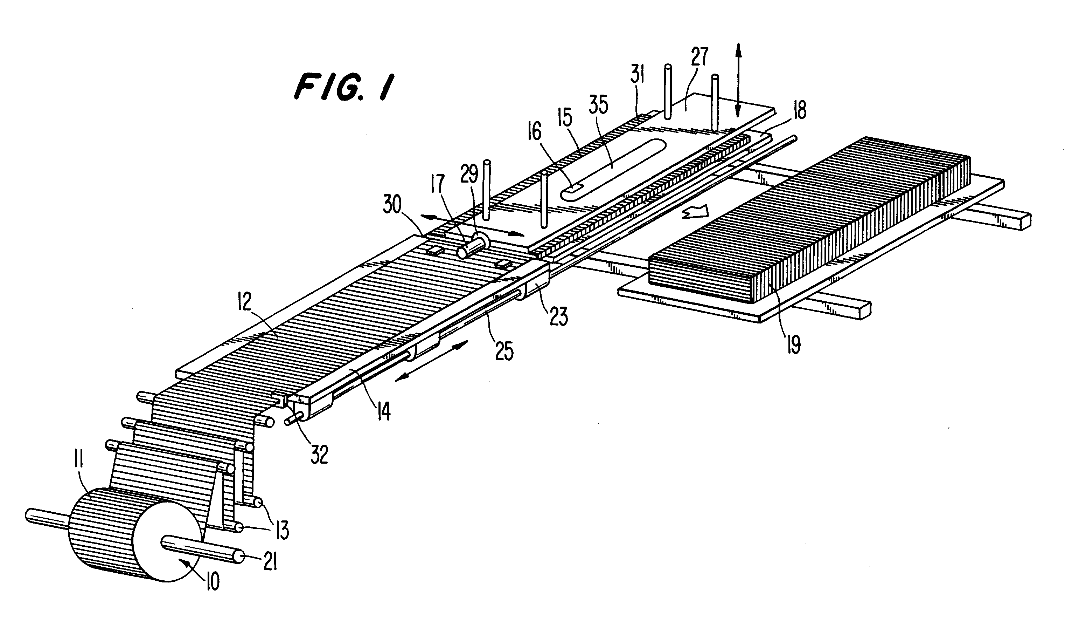

The machine illustrated is designed to fabricate a cellular or honeycomb structure in compressed form of any reasonable width, thickness and cell size from a single supply roll of flexible web material. The individual stations of the machine of this invention are depicted in Fig. 1 wherein a supply roll 10 carrying a web of flexible material 11having lines of adhesive 12 printed thereon at equally spaced intervals is drawn off by being passed over unwind guide rolls 13 and then positioned on carrier means 14 for transport to vacuum manifold area 15. The position and length of the respective sheets are determined by the photocell signal 16. The cutting of the individual sheets occurs at cutting station 17. Subsequent to cutting and release of vacuum, the cut sheets are stacked in precise staggered position relative toeach other on the stacking bed 18 from where the appropriately dimensioned, registered, layered unexpanded block 19 is removed for eventual expansion into open cell honeycomb material.

The continuous web 11 of material out of which the honeycomb is to be made may be in the form of metal foil, paper (non-wovens), resin impregnated glass, textile fabric, polymeric film, and the like. The materials can be porous and, in view of the handling techniques utilized in the instant machine, need exhibit only minimal tensile strength. The printing of the web 11 with evenly spaced, parall adhesive lines 12 extending transversely of the lengthwise axis of said web 11 may be achieved by means well known to those skilled in the art. Typical approaches include rotogravure printing head assemblies. The applicable adhesive compositions are also well known to those skilled in the art and may comprise, for example, thermosetting resins which are initially dried to a non-takky condition, then subjected to heat to form a thermoplastic flowable stage and finally oven dried to provide permanent adhesive lines which are not adversely affected by subsequent handling, cuttingor stacking operations until cured.

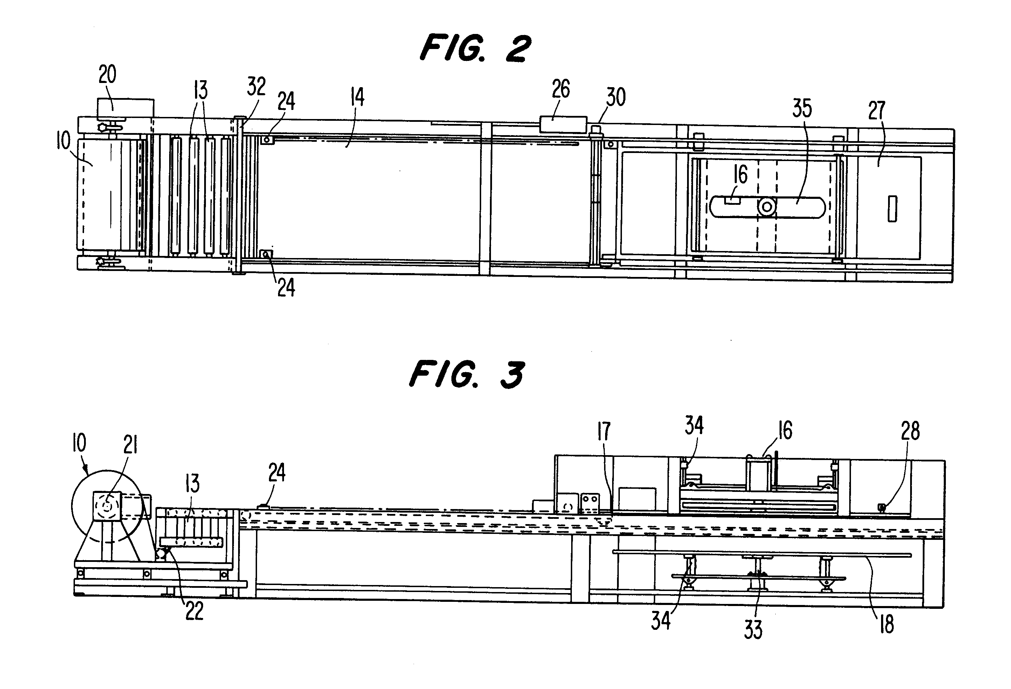

Intermittent feed of the sheet material 11 is achieved via a motor/worm gear reducer unit assembly 20 directly coupled to the supply roll axis 21 which holds the supply roll 10 (see Fig. 2). The motor unit 20 receives a signal from limit switch 22 to intermittently operate the motor as required per sheet feed to the vacuum assembly area.

Carrier means 14 is additionally depicted in Figs. 2 and 3. The web 11 is fed onto the carrier frame 23 and retained in place by retaining means 24. Retaining means 24may be any type of releasable clamp mechanism. Preferred for purposes of this invention are pneumatic cylinders positioned in the corners of frame 23 which serve as "grippers" for the web.

The carrier 14 travels on guides 25 and is controlled by a programmable motion controller operation by means of a servomotor driven system 26. Cell size and sheet length are programmed through an input terminal into the programmable motion controller for each layered, unexpanded block. The controller governs the operation of the servomotor and the sequence of operation of each machine cycle through I/O circuitry and relay logic.

The vacuum manifold 15 consists of a vacuum plate 27 which hold the web material under vacuum as retaining means 24 are released and carrier 14 returns to its original position. The vacuum is created by a vacuum pump assembly 28 known to those skilled in the art. The vacuum plate 27 has an adjustable internal mainfold (not shown) which serves tohold different sheet lengths of layered, unexpanded blocks.

The cutting station 17 may comprise any known blade assembly. For example,a rotating blade cooperable with a stationary blade may be used to cut the sheet material 11 into sections of equal and desired lengths. It is preferred for purposes of this invention to utilize a pneumatically operated (not shown) reciprocating circular blade unit 29 positioned at the juncture 30 of the carrier 14, when in its original position, and the vacuum manifold 15. For example, an air motor coupled to circular blade 29 may be utilized to cut the web of flexible material 11.

In cutting and stacking the cut sections 31, it is essential that they be oriented and located properly within the stack 19 and in such manner that adhesive lines 12 adhering the adjacent sections 31 are staggered relative to one another in the stack in orderfor the latter to be expanded into the cellular honeycomb material. Appropriate registration may be achieved by a photocell assembly movably positioned in slot 35 (track not shown) which interacts with the motion controller and correspondingly with the positioning servomotor 26. In particular, photoelectric sensor 16 is a reflective, fiber optic head assembly. Registration is obtained by the properly positioned photocell 16 transmitting a signal generated by the adhesive line 12 to the programmable motion controller 26 which operates the positioning servomotor that drives carrier 14. The signal is generated and transmitted as the carrier 14 moves inthe direction of the vacuum manifold 15. The photocell identifies an adhesive line when the carrier 14 is positioned the desired sheet length which has been programmed into the input terminal of the prgrammable motion controller. The program allows for the subsequent sheet to be positioned the same distance plus half the adhesive line pitch, i.e. half the distance between successive parallel adhesive lines, from its corresponding photocell signal. The sequential offset registration provides the necessary staggered relationship for the eventual honeycomb configuration. Any staggered sequence may be achieved in this manner.

Subsequent to the positioning and cutting operations, the vacuum is released dropping the cut sheet onto the elevated stacking bed 18. Flexible web material 11 edge guidance is provided throughout the operation by means of an infrared edge guide unit 32 and corresponding solid state control circuitry. The edge guided and precisely positioned layered unexpanded block is removed for expansion when it exhibits the desired dimensions. The bed 18 raises and lowers as required through the use of a pneumatic cylinder 33 and rack and pinion assembly 34 for synchronized vacuum panel/stacking bed motion during each machine cycle.

For the sake of clarity, detail is not provided for all the electrical connections, drive units and computer programs. The invention is not, however, dependent on these particulars.

By way of illustration of the method of the invention, the desired adhesive printed sheet material is fed on an intermittent basis over the unwind guide rolls, through the guide slot 32 onto the carrier where it is held in place by the four pneumatic grippers. The carrier then transports the sheet material to the vacuum manifold area. The photocell transmits a signal to the programmable motion controller which operates the positioning servomotor which, in turn, drives the carrier. The distance of travel is determined by the photocell identifying an adhesive line when the carrier has traveled the desired distance from the photocell signal. Vacuum is applied to the manifold to hold the sheet material, whereupon the grippers are released and the carrier returns to its initial position. The grippers are re-activated upon return to said initial position. Thereafter, the circular cutting blade cuts the sheet to the desired length, the vacuum is released and the cut sheet drops onto the stacking bed. The subsequent sheet is manipulated in the same manner except that the distance of travel is increased by one half the distance between successive adhesive lines. This method provides sheets of identical length but with the adhesive lines of successive cut lines being in a staggered configuration. The operation continues until a block of appropriate dimensions is obtained, whereupon the block is removed and is available for expansion according to procedures known to those skilled in the art.

It is to be noted that procedures and materials may be varied without departing from the scope of the invention as defined by the following claims.

## Claims

1. An apparatus for cutting to selected length and stacking sheet material having spaced parallel lines of adhesive extending transversely across said sheet material, said apparatus comprising guide rolls for intermittently feeding said sheet material; electro/mechanical means connected to said rolls for effective intermittent rotation thereof; movable carrier means adapted to receive, retain and transport said sheet material provided by said rolls; means for moving said carrier downstream to a delivery area and returning it to its original position comprising a motion controller reacting to a programmed movement and distance sequence and operating a servo motor for effecting said movement; a vacuum plate positioned downstream from said carrier means when the latter is in its original position and above said carrier means when the latter is in the delivery area and adapted to receive and retain by vacuum the sheet material transported by said carrier means; a photocell assembly positioned in the delivery area comprising a photocell sensor for transmitting a signal generated by the lines of adhesive extending transversely across said sheet-material to said motion controller and for terminating said signal when said photocell identifies a predetermined adhesive line on said sheet material thereby defining the distance of movement of said carrier, the program of said motion controller providing that adjacent cut sheets have their parallel adhesive lines in staggered relationship relative to one another, means for cutting said sheet material when retained by said vacuum plate positioned at the juncture of said carrier means in its original position and the vacuum plate; and a table positioned below said vacuum plate for receiving the registered cut sheets when the vacuum is removed from said vacuum plate.

2. The apparatus of claim 1, which also contains a supply roll carrying said sheet material positioned upstream of said guide rolls and wherein said electro/mechanical means is a motor/worm gear reducer unit coupled to said supply roll.

3. The apparatus of claim 1, wherein the retaining capability of said carrier means is provided by pneumatic cylinder grippers positioned on said carrier means.

4. The apparatus of claim 3, wherein said grippers are positioned in the corners of said carrier means.

5. The apparatus of claim 1, wherein said carrier means travels from its original position to the delivery area on guide rails.

6. The apparatus of claim 1, wherein cell size and sheet length are prgrammed through an input terminal into said programmed motion controller.

7. The apparatus of claim 1, wherein said cutting means is a pneumatically operated reciprocating circular blade unit.

8. The apparatus of claim 1, wherein said photocell sensor is a reflective, fiber optic head assembly.

9. The apparatus of claim 1 which additionally contains edge guidance means positioned at the upstream end of the carrier means for maintaining the integrity of the respective edges of the transported and cut sheets.

10. The apparatus of claim 1, wherein said table is movable upwards and downwards.

11. The apparatus of claim 10, wherein said upward and downward movement is provided by a pneumatic cylinder and a rack and pinion assembly affixed to said table.

12. A method for producing a stack of cut sheets of predetermined equal dimensions from a web of sheet material having equally spaced parallel lines of adhesive extending transversely across said sheet, said method comprising the steps of intermittently transporting said web of material to a fixed position, generating a photoelectric signal during said transport based on identification of a specified adhesive line, transmitting said signal to a programmed motion controller operating a servomotor to define the distance traveled by said web of material, at least every second section of web material traveling, in each instance, a distance greater than that traveled by the prior section of web material, said increased distance being a portion of the distance between any two parallel lines of adhesive; transversely cutting said web material into sheets of predetermined dimensions; releasing said cut web from the fixed position; and superposing said cut sheets in a stack of equal dimensions such that the adhesive lines of every two adjacent sheets are staggered relative to one another.

FIG. 1

FIG. 2

FIG. 3

EP 0 507 733 A1

**European Patent Office**

**EUROPEAN SEARCH REPORT**

Application Number

EP 92 81 0215

Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-901 583 (DUFAYLITE DEVELOPMENTS)<br><br>* page 2, line 10 - line 17 *<br>* page 2, line 75 - line 80 *<br>* page 2, line 108 - line 128 *<br>* page 3, line 16 - line 24; figure 1 *<br>--- | 1,6,<br>10-12 | B31D3/02<br>B65H29/34<br>B65H20/18 |
| Y | WO-A-9 101 873 (3B S. P. A.)<br><br>* page 10, line 21 - page 11, line 15 *<br>* page 14, line 2 - line 18 *<br>* page 16, line 4 - line 6; figure 3 *<br>--- | 1,6,<br>10-12 | |
| A | EP-A-0 336 327 (M. TACHIBANA)<br><br>* column 2, line 51 - column 3, line 53; figures 1,3 *<br>--- | 1,3,4,6,<br>10,12 | |
| A | US-A-4 708 761 (AKIRA TANIGUCHI ET AL)<br>* column 2, line 56 - column 3, line 5 *<br>* column 3, line 28 - column 4, line 5; figures 1,2,6 *<br>--- | 1,5,9,12 | |
| A | GB-A-1 116 934 (CORNING GLASS)<br>* page 8, line 84 - page 9, line 37; figures 1,2 *<br>--- | 1,7,12 | TECHNICAL FIELDS<br>SEARCHED (Int. Cl.5)<br><br>B31D<br>B32B<br>B65H |
| A | US-A-3 522 129 (C F H CRATHERN)<br>* column 4, line 3 - line 19; figure 1A *<br>--- | 1,8 | |
| A | US-A-4 340 441 (P J THWAITES ET AL)<br>* column 4, line 33 - column 6, line 41; figures 1,2 *<br>--- | 1,7 | |
| A | FR-A-1 496 628 (M. HOLTSLAG)<br>* the whole document *<br>--- | 1,12 | |
| | -/-- | | |

The present search report has been drawn up for all claims

| Place of search | Date of completion of the search | Examiner |
|---|---|---|
| THE HAGUE | 01 JULY 1992 | PHILPOTT G. R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................

& : member of the same patent family, corresponding document

EPO FORM 1503 03.82 (P0401)

**European Patent Office**

## EUROPEAN SEARCH REPORT

Application Number

EP 92 81 0215
Page 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-905 287 (DUFAYLITE DEVELOPMENTS)<br>* page 5, line 56 - line 93 *<br>* page 6, line 5 - line 46 *<br>* page 6, line 95 - line 103 *<br>--- | 1,12 | |
| A | GB-A-717 072 (CALIFIRNIA REINFORCED PLASTICS)<br>* claims 1,2; figures 1,2,7 *<br>----- | 1,12 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 01 JULY 1992 | PHILPOTT G. R. |

EPO FORM 1503 03.82 (P0401)